# EUROPÄISCHE PATENTANMELDUNG

(11) **EP 2 302 268 A1**
(43) Veröffentlichungstag der Anmeldung: **30.03.2011**
(21) Anmeldenummer: 09012184.9
(22) Anmeldetag: 25.09.2009
(51) Int. Cl.: F16J 15/46, F16L 55/134, B08B 9/032

(54) **Dichtung, Dichtungsanordnung mit einem solchem Dichtring und deren Verwendung**

(71) Anmelder: Carl Freudenberg KG, 69469 Weinheim (DE)
(72) Erfinder: Klenk, Thomas, 69221 Dossenheim (DE); Barth, Armin, 69517 Gorxheimertal (DE)

(57) **Zusammenfassung**

Dichtungsanordnung, umfassend einen Dichtring mit einem druckbeaufschlagbaren, radial in Richtung einer abzudichtenden Fläche (1) aufblähbaren Blähbalg (2), wobei der Blähbalg (2) auf der der abzudichtenden Fläche (1) radial zugewandten Seite zumindest eine Dichtlippe (3) aufweist und einen Blähwulst (4), der der Dichtlippe (3) axial benachbart zugeordnet ist sowie ein erstes Maschinenelement (7) mit Einbauraum (8), in dem der Dichtring festgelegt ist und ein zweites Maschinenelement (9) mit der abzudichtenden Fläche (1), wobei die Dichtlippe (3) des Blähbalgs (2), unabhängig von der Druckbeaufschlagung des Blähbalgs (2), die abzudichtende Fläche (1) stets dichtend berührt und wobei der Blähwulst (4) der abzudichtenden Fläche (1) im nicht-druckbeaufschlagten Zustand des Blähbalgs (2) mit radialem Abstand benachbart zugeordnet ist und nur bei Druckbeaufschlagung an die abzudichtende Fläche (1) dichtend anlegbar ist.

## Beschreibung

### Technisches Gebiet

Die Erfindung betrifft einen Dichtring, eine Dichtungsanordnung mit einem solchen Dichtring und deren Verwendung.

### Stand der Technik

Zur Reparatur von Pipelines, die unter Druck stehende Medien wie zum Beispiel Öl, Gas oder Wasser führen, können spezielle Stopfen eingesetzt werden, die Teil eines Absperrkopfes sind. Der Absperrkopf ist Bestandteil einer Hot-Tapping-Anlage. Hot-Tapping bedeutet "Anbohren unter Druck" und stellt ein Verfahren dar, bei dem eine druckführende Pipeline angebohrt und ein Abzweig oder ein Bypass oder eine Umgehungsleitung hergestellt werden kann, wenn Rohrleitungsabschnitte zu reparieren oder auszutauschen sind. Der Prozess des Hot-Tappings läuft ohne Betriebsunterbrechungen und Leckagen ab, was den Vorteil hat, dass die Pipeline während der Reparatur weiter betrieben werden kann. Neben dem Verfahren des Hot-Tappings hat sich das Line-Stopping-Verfahren etabliert. Das Line-Stopping-Verfahren ist ein Verfahren bei dem der Medienstrom in einem Abschnitt einer Pipeline zeitweise unterbrochen werden kann. Die Unterbrechung des Medienstroms, der die Pipeline durchströmt, kann zum Zwecke von Reparaturen, Umlegungen und Umbauten erfolgen.

Bei Anlagen, die zur Durchführung des Hot-Tapping-Verfahrens beziehungsweise des Line-Stopping-Verfahrens eingesetzt werden können, werden in der Regel herkömmliche elastomere Dichtscheiben eingesetzt, die jedoch die sehr speziellen Bedürfnisse und Anforderungen im Einsatz nicht ausreichend prozesssicher erfüllen.

Die bekannten Systeme umfassen einen Hydraulikzylinder, ein Absperrkopfgehäuse sowie einen Absperrkopf. Mit dem Hydraulikzylinder können eine Vielzahl unterschiedliche Größen aufweisende Absperrköpfe betrieben werden. In der Regel wird das bekannte System an ein Fitting, der an ein T-Stück der Pipeline angeflanscht ist, aufgebracht. Auf diesen wird das Gehäuse, in dem sich der Absperrkopf befindet, angeflanscht und anschließend nach Beaufschlagung des Hydraulikzylinders der Absperrkopf in das T-Stück eingefahren. Der Absperrkopf weist an seinem unteren Ende eine auf die untere Innenwand der Pipeline auftreffende Rolle auf, welche den Absperrkopf bei der weiteren im Wesentlichen in vertikaler Richtung erfolgenden Einfahrbewegung ausrichtet und in Dichtposition überführt. Am Umfang des Absperrkopfes ist eine Dichtscheibe aufgenommen, die aus einem Elastomermaterial gefertigt ist. Beim Einführen des Absperrkopfes in den abzudichtenden Strömungsquerschnitt wird der Absperrkopf mit der Dichtscheibe mehrmals hin und her bewegt, um so die Innenwand der Pipeline zu reinigen, um Anlagerungen dort abzulösen. Dabei kann die Dichtscheibe so stark beschädigt werden, dass eine Abdichtung anschließend nicht mehr möglich ist. Ist der Absperrkopf in die Dichtposition überführt, wird der in der Pipeline herrschende Druck des Mediums vom Absperrkopf abgesperrt. Der in Strömungsrichtung in der Pipeline herrschende Druck drückt die Dichtscheibe gegen die Innenwand der Pipeline und dichtet diese ab.

Es hat sich jedoch gezeigt, dass ein großer Radialspalt zwischen dem Absperrkopf und der Innenwand der Pipeline vom 20 mm und mehr mit den bestehenden Lösungen nicht prozesssicher abgedichtet werden kann. Stark verformte zylindrische Rohre, deren Strömungsquerschnitt oval verformt ist, lassen sich mit der am Absperrkopf aufgenommenen ringförmig ausgebildeten Dichtscheibe nicht prozesssicher abdichten, da aufgrund des Ovals relativ große Spalte verbleiben, die durch eine kreisrund ausgeführte Dichtscheibe eben nicht abgedichtet werden können. Des weiteren hat sich gezeigt, dass bei bisherigen Lösungsansätzen von verformbaren Dichtelementen, diese ganz oder teilweise durch den abzudichtenden Druck unterwandert werden und sich aufgrund des ständigen Anstehens des abzudichtenden Drucks die gesamte Dichtung samt Absperrkopf, z.B. im Anschluss an die Reparatur, nicht mehr aus dem abgedichteten Strömungsquerschnitt demontieren lässt.

### Darstellung der Erfindung

Der Erfindung liegt die Aufgabe zugrunde, eine Dichtungsanordnung mit einem Dichtring der eingangs genannten Art derart weiter zu entwickeln, dass der Dichtring und die Dichtungsanordnung eine verbesserte Dichtwirkung während einer längeren Gebrauchsdauer aufweisen, auch dann, wenn die Innenwand der abzudichtenden Pipeline durch den Dichtring gereinigt wird, um Anlagerungen dort abzulösen. Außerdem soll die Handhabung des Dichtrings und der Dichtungsanordnung bei Durchführung des Hot-Tapping-Verfahrens einfach und problemlos möglich sein.

Zur Lösung der Aufgabe ist ein Dichtring vorgesehen, umfassend einen druckbeaufschlagbaren, radial in Richtung einer abzudichtenden Fläche aufblähbaren Blähbalg, wobei der Blähbalg auf der der abzudichtenden Fläche radial zugewandten Seite zumindest eine Dichtlippe aufweist und einen Blähwulst, der der Dichtlippe axial benachbart zugeordnet ist.
Die Dichtlippe kann bei einem solchen Dichtring drei Funktionen übernehmen. Die Dichtlippe dichtet die abzudichtende Fläche ab, reinigt die abzudichtende Fläche von Verunreinigungen im Sinne eines Abstreifers, wenn die Dichtlippe bei Durchführung des Hot Tapping-Verfahrens translatorisch über die abzudichtende Fläche bewegt wird und ist als Stütze für den axial benachbarten Blähwulst ausgebildet. Dadurch, dass die Dichtlippe die abzudichtende Fläche stets anliegend berührt, wird bei druckbeaufschlagter Pipeline und bei Druckbeaufschlagung des Blähbalgs und damit des Blähwulstes eine Extrusion des Blähwulstes in Richtung des niedrigeren Drucks der Pipeline sicher vermieden. Durch diese Vermeidung von Extrusion wird die Gebrauchsdauer des Dichtrings wesentlich verlängert, weil Gebrauchsdauer verringernde Zugspannungen innerhalb des elastomeren Werkstoffs des Dichtrings und / oder unerwünscht hohe Biegebeanspruchungen vermieden werden. Außerdem ist von Vorteil, dass sowohl die Dichtlippe als auch der Blähwulst das abzudichtende Medium zurückhalten. Die Dichtwirkung ist dadurch verbessert. Selbst dann, wenn die Dichtlippe oder der Blähwulst eine Leckage aufweisen würden, würden der Blähwulst oder die Dichtlippe weiterhin abdichten. Der Dichtring ist dadurch besonders prozesssicher.

Der Blähbalg besteht bevorzugt aus einem elastomeren Werkstoff. Derartige Werkstoffe sind für viele Dichtungsanwendungen in vielen Spezifikationen kostengünstig verfügbar und bekannt.

Die Dichtlippe und der Blähwulst sind bevorzugt einstückig ineinander übergehend und materialeinheitlich ausgebildet. Die Herstellung eines solchen Dichtrings ist dadurch einfach und kostengünstig möglich.

Für spezielle Anwendungsfälle kann es jedoch auch vorgesehen sein, dass die Dichtlippe und der Blähwulst aus unterschiedlichen Materialien bestehen. Dabei ist von Vorteil, dass die jeweiligen Werkstoffe besonders gut an die jeweiligen Anwendungsfälle angepasst werden können. So besteht beispielsweise die Möglichkeit, die Dichtlippe aus einem Werkstoff vorzusehen, der einen besonders geringen abrasiven Verschleiß auch dann aufweist, wenn die Dichtlippe häufig als Abstreifer zur Ablösung von Anlagerungen an der Innenwand der Pipeline eingesetzt wird. Als Werkstoff für den Blähwulst kann demgegenüber ein an die abzudichtende Fläche besonders anschmiegsamer Werkstoff Verwendung finden.

Beide Stirnseiten des Dichtrings sind bevorzugt als Klemmwulst zur Befestigung des Dichtrings ausgebildet. Der Dichtring wird mittels der Klemmwülste kraft- und / oder formschlüssig, bevorzugt formschlüssig, dichtend an einem ersten Maschinenelement, beispielsweise einem Absperrkopf zur Durchführung eines Hot-Tapping-Verfahrens, befestigt. Der aufblähbare Blähwulst ist der Dichtlippe bedarfsweise zuschaltbar.

Außerdem betrifft die Erfindung eine Dichtungsanordnung, umfassend einen Dichtring, wie zuvor beschrieben, sowie ein erstes Maschinenelement mit Einbauraum, in dem der Dichtring festgelegt ist und ein zweites Maschinenelement mit der abzudichtenden Fläche, wobei die Dichtlippe des Blähbalgs, unabhängig von der Druckbeaufschlagung des Blähbalgs, die abzudichtende Fläche stets dichtend berührt und wobei der Blähwulst der abzudichtenden Fläche im nicht-druckbeaufschlagten Zustand des Blähbalgs mit radialem Abstand benachbart zugeordnet ist und nur bei Druckbeaufschlagung an die abzudichtende Fläche dichtend anlegbar ist. Der aufblähbare Blähbalg ist bei Druckbeaufschlagung radial in Richtung der abzudichtenden Fläche expandierbar. Bei Druckbeaufschlagung des Blähbalgs expandiert der Blähwulst in radialer Richtung zur Überbrückung von Radialspalten in der Größenordnung von 20 bis 30 mm und mehr und legt sich mit seiner äußeren Mantelfläche dichtend an die Innenseite der abzudichtenden Pipeline an. Der Strömungsquerschnitt der Pipeline ist dann sowohl durch den Blähwulst als auch durch die Dichtlippe abgedichtet, wobei die Abdichtung einem abzudichtenden Druckniveau von 10 bis 80 bar und mehr problemlos standhält. Der Dichtbereich an der Innenwand der Pipeline, an den der Blähwulst anlegbar ist, kann zuvor durch ein Hin- und Herfahren in Richtung der Pipeline durch die als Abstreifer ausgebildete Dichtlippe von Anlagerungen gereinigt worden sein, so dass sich einerseits eine besonders gute und zuverlässige Abdichtung im Bereich des Blähwulstes ergibt und andererseits abrasiver Verschleiß des Blähwulstes durch die glatte Innenwand der Pipeline auf ein Minimum reduziert ist. Die gute Dichtwirkung des Blähwulstes wird außerdem dadurch erreicht, dass die Dichtlippe als Stütze für den Blähwulst ausgebildet und auf der druckabgewandten Seite des Blähwulstes angeordnet ist. Bei Druckbeaufschlagung des aufgeblähten Blähwulstes aus dem abzudichtenden Raum der Pipeline legt sich dieser an die Dichtlippe an, die sich ebenfalls an der Innenwand der Pipeline dichtend abstützt. Ein Ausweichen des Blähwulstes vor dem Druck aus dem abzudichtenden Raum und / oder eine Spaltextrusion, die zu einer Beschädigung und / oder Zerstörung des Blähwulstes führen könnte, ist durch die als Stütze ausgebildete Dichtlippe ausgeschlossen.

Die Dichtlippe und der Blähwulst sind in einer funktionstechnischen Reihenschaltung angeordnet. Wie zuvor bereits ausgeführt, berührt die Dichtlippe die Innenwand der abzudichtenden Pipeline stets dichtend und anliegend. Die Dichtwirkung des Blähwulstes wird zugeschaltet, sobald der Blähbalg druckbeaufschlagt wird. Zum Verschieben der Dichtungsanordnung innerhalb der Pipeline ist der Blähwulst nicht-druckbeaufschlagt, und nur die Dichtlippe berührt die Innenwand der Pipeline anliegend. Befindet sich die Dichtungsanordnung an der gewünschten Stelle in der Pipeline und soll dieser Strömungsquerschnitt dann abgedichtet werden, wird der Blähwulst druckbeaufschlagt, bis er die Innenwand der Pipeline dichtend berührt und somit der Dichtlippe funktionstechnisch in Reihe zugeschaltet.

Das erste Maschinenelement und der Dichtring können eine Druckkammer begrenzen. Das erste Maschinenelement kann als Absperrkopf des eingangs beschriebenen Hot-Tapping- oder Line-Stopping-Verfahrens ausgebildet sein. Innerhalb des ersten Maschinenelements sind dann Leitungen angeordnet, die in die Druckkammer münden, so dass bei Druckbeaufschlagung der Blähbalg aufblähbar ist.

Die Druckkammer kann sich sowohl unter dem Blähwulst als auch unter der Dichtlippe erstrecken. Hierbei ist von Vorteil, dass die Dichtlippe, bei nichtdruckbeaufschlagtem Blähbalg, in radialer Richtung besonders nachgiebig ist und die Innenwand der Pipeline nur unter geringer elastischer Vorspannung anliegend berührt. Beim Hin- und Herbewegen des Absperrkopfs und damit der Dichtungsanordnung innerhalb der Pipeline ist die Reibung zwischen der Dichtlippe und der Innenwand der Pipeline besonders gering, wodurch eine verlängerte Gebrauchsdauer durch geringen Verschleiß erzielt wird. Bei Druckbeaufschlagung des Blähbalgs werden sowohl die Dichtlippe als auch der Blähwulst druckabhängig an die Innenwand der Pipeline angedrückt.

Nach einer anderen Ausgestaltung kann es vorgesehen sein, dass die Druckkammer im Wesentlichen nur unter dem Blähwulst angeordnet ist und dass die Dichtlippe - in nicht-druckbeaufschlagten Zustand des Blähbalgs - auf einem in der Druckkammer angeordneten Stützkörper abgestützt ist. Im Vergleich zu der zuvor beschriebenen Ausgestaltung ist die Dichtlippe bei nichtdruckbeaufschlagtem Blähbalg dadurch radial in Richtung der Druckkammer weniger nachgiebig, weil sie auf dem Stützkörper abgestützt ist. Zum wirkungsvollen Abstreifen von Anlagerungen von der Innenwand der Pipeline ist diese verringerte Nachgiebigkeit von Vorteil.

Der Stützkörper berührt den Blähbalg bevorzugt ungehaftet. Bei Druckbeaufschlagung des Blähbalgs kann sich deshalb der in die Druckkammer eingeleitete Druck auch zwischen den Stützkörper und die Dichtlippe fortpflanzen, so dass die Dichtlippe trotz der Abstützung auf dem Stützkörper und der guten Abstreifwirkung zusätzlich druckabhängig an die Innenwand der Pipeline oder Rohrleitung dichtend angedrückt wird.

Der Einbauraum kann im Wesentlichen U-förmig ausgebildet sein, mit axialen Begrenzungswänden und einer radial in Richtung des zweiten Maschinenelements offenen Öffnung. Die Herstellung eines solchen Einbauraums ist einfach und kostengünstig möglich sowie zweckmäßig, im Hinblick auf den in radialer Richtung aufblähbaren Blähbalg.

Im nicht-druckbeaufschlagten Zustand des Blähbalgs ist die Öffnung nur von der Dichtlippe radial in Richtung des zweiten Maschinenelements überragt. Der im Vergleich zur Dichtlippe empfindlichere Blähbalg ist bei Verschiebung der Dichtungsanordnung durch die Pipeline sicher innerhalb des Einbauraums angeordnet und überragt die Öffnung erst, wenn er druckbeaufschlagt an der Innenwand der Pipeline dichtend angelegt ist.

Die Dichtlippe kann, bezogen auf die abzudichtende Fläche, eine radiale Überdeckung aufweisen. Dadurch wird sichergestellt, dass die Dichtlippe die abzudichtende Innenwand der Pipeline auch dann unter elastischer Vorspannung dichtend berührt, wenn der Blähbalg nicht-druckbeaufschlagt ist. Jeder Klemmwulst kann im Einbauraum kraft- und / oder formschlüssig angeordnet sein. Dazu kann es vorgesehen sein, dass im Einbauraum ein Spannring angeordnet ist, wobei jeder Klemmwulst mittels des Spannrings unter elastischer Vorspannung dichtend an die jeweilige axiale Begrenzungswand angelegt ist. Der Spannring bildet dabei einen Bestandteil des ersten Maschinenelements und kann mit den axialen Begrenzungswänden, zum Beispiel durch eine Verschraubung, verbunden sein.

Für den Fall, dass ein Stützkörper zur radialen Abstützung der Dichtlippe innerhalb der Druckkammer zur Anwendung gelangt, kann es vorgesehen sein, dass der Spannring und der Stützkörper einstückig ausgebildet sind. Insgesamt weist die Dichtungsanordnung dadurch einen teilearmen und einfachen Aufbau auf, und die Gefahr von Montagefehlem ist dadurch auf ein Minimum reduziert.

Außerdem betrifft die Erfindung die Verwendung eines Dichtrings und / oder einer Dichtungsanordnung, wie zuvor beschrieben, in einem Werkzeug mit Absperrkopf zur Abdichtung von Medien führenden Leitungen. Der Dichtring und / oder die Dichtungsanordnung können zur Abdichtung von Öl- oder Gasleitungen verwendet werden. Die Unterbrechung des Öl- oder Gasstroms innerhalb der Pipeline kann zum Zwecke von Reparaturen, Umlegungen oder Umbauten erfolgen. Durch die Robustheit des Dichtrings und der Dichtungsanordnung sind diese besonders gut für derartige Verwendungen geeignet.

Der Blähwulst kann, im Längsschnitt des Dichtrings und der Dichtungsanordnung betrachtet, im Wesentlichen V-förmig radial nach innen in die Druckkammer gewölbt ausbildet sein. Dadurch wird, bezogen auf die axiale Ausdehnung des Einbauraums, eine vergleichsweise große Länge des Blähwulsts erreicht, so dass er sich bei Druckbeaufschlagung des Blähbalgs an die abzudichtende Fläche des zweiten Maschinenelements anlegen kann, ohne unerwünscht großen Zugspannungen ausgesetzt zu sein.

Die Bohrung zur Druckbeaufschlagung der Druckkammer kann sich durch den Spannring hindurch erstrecken. Bevorzugt ist der Blähwulst derart ausgebildet, dass er bei Atmosphärendruck innerhalb der Druckkammer in die zuvor beschriebene V-förmige Gestalt selbsttätig zurückfedert.
Es kann jedoch auch vorgesehen sein, dass die Druckkammer durch Anlegen eines Unterdrucks entlüftet wird, so dass der Blähwulst unterdruckbedingt in die zuvor beschriebene V-förmige Gestalt gebracht wird. Durch einfaches Entlüften und erforderlichenfalls ein Anlegen von Unterdruck wird der radiale Spalt zwischen den beiden Maschinenelementen prozesssicher wieder freigegeben. Die Dichtlippe liegt jedoch auch dann weiterhin an der Innenwand der Pipeline an. Der Absperrkopf kann dann aus der Pipeline entfernt werden.

### Kurzbeschreibung der Zeichnung

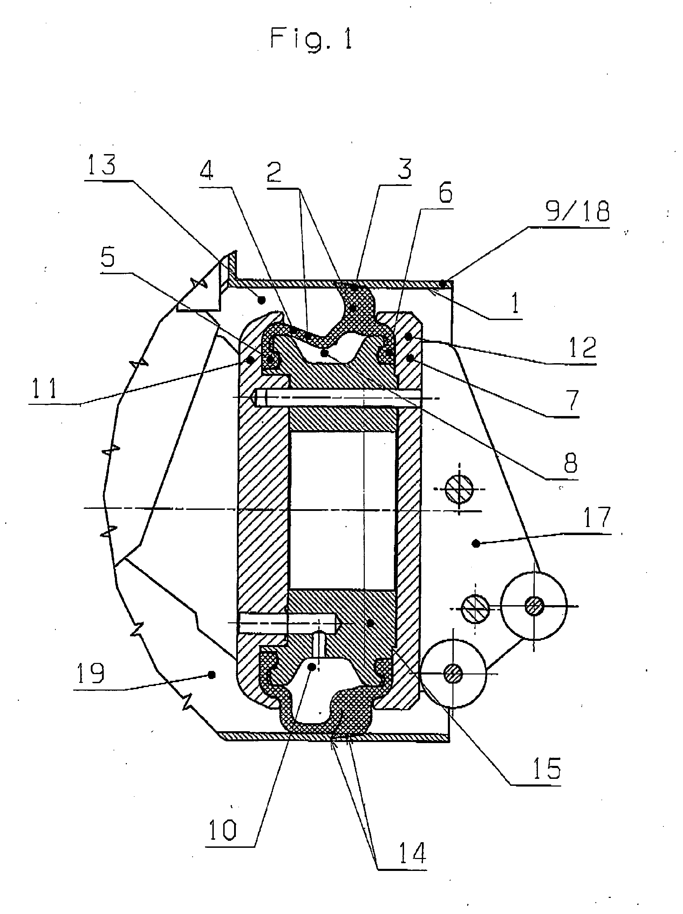

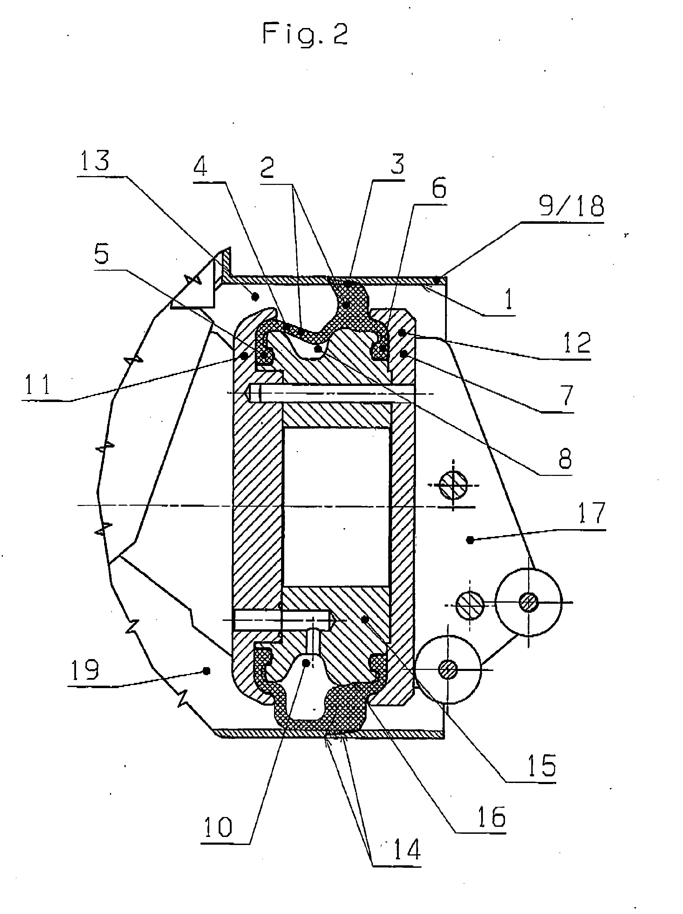

Zwei Ausführungsbeispiele werden nachfolgend anhand der Fig. 1 und 2 näher erläutert. Diese zeigen jeweils in schematischer Darstellung:
- Fig. 1: ein erstes Ausführungsbeispiel der erfindungsgemäßen Dichtungsanordnung mit dem erfindungsgemäßen Dichtring, bei dem sich die Druckkammer sowohl unter dem Blähwulst als auch unter der Dichtlippe erstreckt,
- Fig. 2: ein zweites Ausführungsbeispiel, bei dem sich die Druckkammer im Wesentlichen nur unter dem Blähwulst erstreckt und die Dichtlippe auf einem in der Druckkammer angeordneten Stützkörper abgestützt ist.

### Ausführung der Erfindung

In Fig. 1 ist ein erstes Ausführungsbeispiel gezeigt. Im oberen Teil der Darstellung ist der Dichtring im nicht-druckbeaufschlagten Zustand dargestellt, im unteren Teil der Darstellung demgegenüber druckbeaufschlagt.

In Fig. 1 ist ein Ausschnitt eines Absperrkopfes 17 gezeigt, der in ein zweites Maschinenelement 9 eingeführt ist. Das zweite Maschinenelement 9 ist als Pipeline 18 zur Förderung von Öl oder Gas ausgebildet. Das erste Maschinenelement 7 bildet den Absperrkopf 17 und weist einen Einbauraum 8 auf, in dem der Dichtring mittels seiner Klemmwülste 5, 6 dichtend festgelegt ist. Das erste Maschinenelement 7 umfasst im hier gezeigten Ausführungsbeispiel die beiden axialen Begrenzungswände 11, 12 und den Spannring 15, der in axialer Richtung zwischen den Begrenzungswänden 11, 12 angeordnet ist und den Dichtring gegenüber den Begrenzungswänden 11, 12 dichtend verklemmt.

Der Dichtring umfasst einen druckbeaufschlagbaren, radial in Richtung der abzudichtenden Fläche 1, aufblähbaren Blähbalg 2, wobei die abzudichtende Fläche 1 die Innenwand der Pipeline 18 bildet. Der Blähbalg 2 weist auf der der abzudichtenden Fläche 1 radial zugewandten Seite 1 eine Dichtlippe 3 auf, die das Abdichten der Pipeline, das Reinigen der abzudichtenden Fläche 1 bevor sich der Blähwulst 4 dichtend daran anlegt und das Stützen des aufgeblähten Blähwulstes 4 übernimmt. Der gesamte Dichtring ist einstückig und materialeinheitlich ausgebildet und besteht aus einem elastomeren Werkstoff, so dass die Dichtlippe 3 und der Blähwulst 4 ebenfalls einstückig ineinander übergehend und materialeinheitlich ausgebildet sind.

Wie aus Fig. 1 zu erkennen ist, berührt die Dichtlippe 3 des Blähbalgs 2, unabhängig von der Druckbeaufschlagung des Blähbalgs 2, die abzudichtenden Fläche 1 stets dichtend. Die Dichtlippe 3 weist, bezogen auf die abzudichtende Fläche 1, eine radiale Überdeckung 14 auf, so dass stets eine Berührung der Dichtlippe 3 mit der abzudichtenden Fläche 1 unter elastischer Vorspannung gegeben ist.

In Fig. 1, oberer Teil der Darstellung, ist der Blähwulst 4 der abzudichtenden Fläche 1 im nicht-druckbeaufschlagten Zustand des Blähbalgs 2 mit radialem Abstand benachbart zugeordnet. Innerhalb der Druckkammer 10 herrscht höchstens Atmosphärendruck oder ein Unterdruck. Im nicht druckbeaufschlagten Zustand des Blähbalgs 2 wird die Öffnung 13 des Einbauraums 8 nur von der Dichtlippe 3 radial in Richtung des zweiten Maschinenelements 9 überragt; der Blähbalg 2 befindet sich - vor äußeren Einflüssen geschützt - im Inneren des Einbauraums 8.

Zur Funktion wird folgendes ausgeführt:
Zur Reparatur der Pipeline 18, die ein unter Druck stehendes Medium wie zum Beispiel Öl oder Gas führt, wird der Absperrkopf 17 innerhalb der Pipeline 18 an die Stelle bewegt, an der die Pipeline 18 abgedichtet werden soll. Der Absperrkopf 17 ist ein Bestandteil einer Hot-Tapping-Anlage, die es ermöglicht,
die Pipeline 18 unter Druck anbohren zu können, ohne dass das abzudichtende Medium entweicht. Dadurch können für Reparaturzwecke Abzweige oder
Bypässe gelegt werden, um beispielsweise defekte Abschnitte der Pipeline 18 reparieren oder austauschen zu können. Der Prozess des Hot-Tappings kann während des Betriebs der Pipeline erfolgen und ist an sich bekannt.
Im Laufe der Zeit bilden sich an der abzudichtenden Fläche 1 der Pipeline 18 Anlagerungen, die ein sicheres Abdichten an dieser Stelle verhindern können. Um diese Anlagerungen von der abzudichtenden Fläche 1 zu entfernen, wird der Absperrkopf 17 mit der an der abzudichtenden Fläche 1 anliegenden Dichtlippe 3 hin und her bewegt.

Beim Hin- und Herverschieben des Absperrkopfes 17 innerhalb der Pipeline 18 liegt die Dichtlippe 3 nur mit vergleichsweise geringer radialer Vorspannung an der abzudichtenden Fläche 1 der Pipeline 18 an. Durch die Nachgiebigkeit des elastomeren Werkstoffs federt der Blähbalg 2 radial nach innen in die Druckkammer 10 ein. Sowohl die Reinigungsleistung auf der abzudichtenden Fläche 1 als auch der abrasive Verschleiß der Dichtlippe 3 sind jeweils vergleichsweise gering.

Befindet sich der Absperrkopf 17 dann, wie hier gezeigt, in seiner gewünschten Position, wird zum Abdichten der Pipeline 18 die Druckkammer 10 druckbeaufschlagt, wobei die Druckkammer 10 im hier gezeigten Ausführungsbeispiel durch den Spannring 15 und den Dichtring begrenzt ist. Die Druckzuführung erfolgt durch den Spannring 15 in die Druckkammer 10.

Im unteren Teil der Darstellung von Fig. 1 ist die Dichtungsanordnung mit aufgeblähtem Blähbalg 2 gezeigt, während der Abdichtung der Pipeline 18. Die Druckkammer 10 erstreckt sich sowohl unter dem Blähwulst 4 als auch unter Dichtlippe 3, so dass der Blähwulst 4 und die Dichtlippe 3 durch die Druckbeaufschlagung des aufgeblähten Blähbalgs 2 verstärkt an die abzudichtenden Fläche 1 der Pipeline 18 angedrückt werden.

Im abzudichtenden Raum 19 liegt der vergleichsweise höhere Druck am Blähwulst an. Der vergleichsweise empfindliche Blähwulst 4 wird durch die dem abzudichtenden Raum 19 axial abgewandte Dichtlippe 3 gestützt, so dass unerwünschte Verformungen und / oder eine Extrusion, die jeweils die Gebrauchsdauer des Dichtrings negativ beeinflussen können, sicher vermieden werden.

Nach erfolgter Reparatur der Pipeline 18 wird die Druckkammer 10 entspannt und der Blähwutst 4 bewegt sich von der abzudichtenden Fläche 1 wieder weg in seine Ausgangsposition, wie in Fig. 1 oberer Teil dargestellt. Der Absperrkopf 17 kann anschließend aus der Pipeline 18 wieder entfernt werden.

In Fig. 2 ist ein zweites Ausführungsbeispiel gezeigt, dass sich vom Ausführungsbeispiel aus Fig. 1 nur dadurch unterscheidet, dass die Dichtlippe 3 auf einem in der Druckkammer 10 angeordneten Stützkörper 16 abgestützt ist. Der Stützkörper 16 ist einstückig mit dem Spannring 15 ausgebildet und der Dichtlippe 3 ungehaftet zugeordnet.

Im Ausführungsbeispiel aus Fig. 2 ist die Reinigungsleistung der Dichtlippe 3 im Vergleich zum Ausführungsbeispiel aus Fig. 1 dadurch vergrößert, dass bei Hin- und Herverlagerung des Absperrkopfes 17 innerhalb der Pipeline 18 die radiale Nachgiebigkeit der Dichtlippe 3 radial nach innen durch den Stützkörper 16 begrenzt ist. Bezogen auf das Ausführungsbeispiel aus Fig. 1 ist die Reinigungsleistung an der abzudichtenden Fläche 1 größer, ebenso wie der abrasive Verschleiß.

Dadurch, dass die Dichtlippe 3 dem Stützkörper 16 ungehaftet zugeordnet ist, bewegt sich bei Druckbeaufschlagung der Druckkammer 10 nicht nur der Blähwulst 4 an die abzudichtende Fläche 1, sondern auch die Dichtlippe 3 hebt von der der Dichtlippe 3 zugewandten Oberfläche des Stützkörpers 16 ab und wird, bedingt durch die Druckbeaufschlagung, verstärkt an die abzudichtenden Fläche 1 angepresst.
Durch die Tandemanordnung von Blähwulst 4 und Dichtlippe 3, die die abzudichtenden Fläche 1 der Pipeline 17 jeweils dichtend berühren, ist eine prozesssichere Abdichtung auch während einer langen Gebrauchsdauer gewährleistet.

## Patentansprüche

1. Dichtring, umfassend einen druckbeaufschlagbaren, radial in Richtung einer abzudichtenden Fläche (1) aufblähbaren Blähbalg (2), wobei der Blähbalg (2) auf der der abzudichtenden Fläche (1) radial zugewandten Seite zumindest eine Dichtlippe (3) aufweist und einen Blähwulst (4), der der Dichtlippe (3) axial benachbart zugeordnet ist.

2. Dichtring nach Anspruch 1, **dadurch gekennzeichnet, dass** der Blähbalg (2) aus einem elastomeren Werkstoff besteht.

3. Dichtring nach einem der Ansprüche 1 oder 2, **dadurch gekennzeichnet, dass** die Dichtlippe (3) und der Blähwulst (4) einstückig ineinander übergehend und materialeinheitlich ausgebildet sind.

4. Dichtring nach einem der Ansprüche 1 bis 3, **dadurch gekennzeichnet, dass** beide Stirnseiten des Dichtrings als Klemmwulst (5, 6) zur Befestigung des Dichtrings ausgebildet sind.

5. Dichtungsanordnung, umfassend einen Dichtring nach einem der Ansprüche 1 bis 4 sowie ein erstes Maschinenelement (7) mit Einbauraum (8), in dem der Dichtring festgelegt ist und ein zweites Maschinenelement (9) mit der abzudichtenden Fläche (1), wobei die Dichtlippe (3) des Blähbalgs (2), unabhängig von der Druckbeaufschlagung des Blähbalgs (2), die abzudichtende Fläche (1) stets dichtend berührt und wobei der Blähwulst (4) der abzudichtenden Fläche (1) im nicht-druckbeaufschlagten Zustand des Blähbalgs (2) mit radialem Abstand benachbart zugeordnet ist und nur bei Druckbeaufschlagung an die abzudichtende Fläche (1) dichtend anlegbar ist.

6. Dichtungsanordnung nach Anspruch 5, **dadurch gekennzeichnet, dass** die Dichtlippe (3) und der Blähwulst (4) in einer funktionstechnischen Reihenschaltung angeordnet sind.

7. Dichtungsanordnung nach einem der Ansprüche 5 oder 6, **dadurch gekennzeichnet, dass** das erste Maschinenelement (7) und der Dichtring eine Druckkammer (10) begrenzen.

8. Dichtungsanordnung nach Anspruch 7, **dadurch gekennzeichnet, dass** sich die Druckkammer (90) sowohl unter dem Blähwulst (4) als auch unter der Dichtlippe (3) erstreckt.

9. Dichtungsanordnung nach Anspruch 7, **dadurch gekennzeichnet, dass** die Druckkammer (10) im Wesentlichen nur unter dem Blähwulst (4) angeordnet ist und dass die Dichtlippe (3) - im nicht-druckbeaufschlagten Zustand des Blähbalgs (2) - auf einem in der Druckkammer (10) angeordneten Stützkörper (16) abgestützt ist.

10. Dichtungsanordnung nach Anspruch 9, **dadurch gekennzeichnet, dass** der Stützkörper (16) den Blähbalg (2) ungehaftet berührt.

11. Dichtungsanordnung nach einem der Ansprüche 5 bis 10, **dadurch gekennzeichnet, dass** der Einbauraum (8) im Wesentlichen U-förmig ausgebildet ist, mit axialen Begrenzungswänden (11, 12) und einer radial in Richtung des zweiten Maschinenelements (9) offenen Öffnung (13).

12. Dichtungsanordnung nach Anspruch 11, **dadurch gekennzeichnet, dass** im nicht-druckbeaufschlagten Zustand des Blähbalgs (2) die Öffnung (13) nur von der Dichtlippe (3) radial in Richtung des zweiten Maschinenelements (9) überragt ist.

13. Dichtungsanordnung nach einem der Ansprüche 5 bis 12, **dadurch gekennzeichnet, dass** die Dichtlippe (3), bezogen auf die abzudichtende Fläche (1), eine radiale Überdeckung (14) aufweist.

14. Dichtungsanordnung nach einem der Ansprüche 5 bis 13, **dadurch gekennzeichnet, dass** jeder Klemmwulst (5, 6) im Einbauraum (8) kraft- und/oder formschlüssig gehalten angeordnet ist.

15. Dichtungsanordnung nach Anspruch 14, **dadurch gekennzeichnet, dass** im Einbauraum (8) ein Spannring (15) angeordnet ist und dass jeder Klemmwulst (5, 6) mittels des Spannrings (15) unter elastischer Vorspannung dichtend an die jeweilige axiale Begrenzungswand (11, 12) angelegt ist.

16. Dichtungsanordnung nach einem der Ansprüche 9 bis 15, **dadurch gekennzeichnet, dass** der Spannring (15) und der Stützkörper (16) einstückig ausgebildet sind.

17. Verwendung eines Dichtrings und / oder einer Dichtungsanordnung nach einem der Ansprüche 1 bis 16 in einem Werkzeug mit Absperrkopf (17) zur Abdichtung von Medien führenden Pipelines (18).

18. Verwendung nach Anspruch 17 zur Abdichtung von Öl- oder Gaspipelines (18).

## Geänderte Patentansprüche

### Geänderte Patentansprüche gemäss Regel 137(2) EPÜ.

**1.** Dichtring, umfassend einen druckbeaufschlagbaren, radial in Richtung einer abzudichtenden Fläche (1) aufblähbaren Blähbalg (2), wobei der Blähbalg (2) auf der der abzudichtenden Fläche (1) radial zugewandten Seite zumindest eine Dichtlippe (3) aufweist und einen Blähwulst (4), **dadurch gekennzeichnet, dass** der Blähwulst (4) der Dichtlippe (3) axial benachbart zugeordnet ist und dass die Dichtlippe (3) als Stütze für den aufgeblähten Blähbalg (2) ausgebildet ist.

**2.** Dichtring nach Anspruch 1, **dadurch gekennzeichnet, dass** der Blähbalg (2) aus einem elastomeren Werkstoff besteht.

**3.** Dichtring nach einem der Ansprüche 1 oder 2, **dadurch gekennzeichnet, dass** die Dichtlippe (3) und der Blähwulst (4) einstückig ineinander übergehend und materialeinheitlich ausgebildet sind.

**4.** Dichtring nach einem der Ansprüche 1 bis 3, **dadurch gekennzeichnet, dass** beide Stirnseiten des Dichtrings als Klemmwulst (5, 6) zur Befestigung des Dichtrings ausgebildet sind.

**5.** Dichtungsanordnung, umfassend einen Dichtring nach einem der Ansprüche 1 bis 4 sowie ein erstes Maschinenelement (7) mit Einbauraum (8), in dem der Dichtring festgelegt ist und ein zweites Maschinenelement (9) mit der abzudichtenden Fläche (1), wobei die Dichtlippe (3) des Blähbalgs (2), unabhängig von der Druckbeaufschlagung des Blähbalgs (2), die abzudichtende Fläche (1) stets dichtend berührt und wobei der Blähwulst (4) der abzudichtenden Fläche (1) im nicht-druckbeaufschlagten Zustand des Blähbalgs (2) mit radialem Abstand benachbart zugeordnet ist und nur bei Druckbeaufschlagung an die abzudichtende Fläche (1) dichtend anlegbar ist. (13) nur von der Dichtlippe (3) radial in Richtung des zweiten Maschinenelements (9) überragt ist.

**13.** Dichtungsanordnung nach einem der Ansprüche 5 bis 12, **dadurch gekennzeichnet, dass** die Dichtlippe (3), bezogen auf die abzudichtende Fläche (1), eine radiale Überdeckung (14) aufweist.

**14.** Dichtungsanordnung nach einem der Ansprüche 5 bis 13, **dadurch gekennzeichnet, dass** jeder Klemmwulst (5, 6) im Einbauraum (8) kraft- und/oder formschlüssig gehalten angeordnet ist.

**15.** Dichtungsanordnung nach Anspruch 14, **dadurch gekennzeichnet, dass** im Einbauraum (8) ein Spannring (15) angeordnet ist und dass jeder Klemmwulst (5, 6) mittels des Spannrings (15) unter elastischer Vorspannung dichtend an die jeweilige axiale Begrenzungswand (11, 12) angelegt ist.

**16.** Dichtungsanordnung nach Anspruch 15, **dadurch gekennzeichnet, dass** der Spannring (15) und der Stützkörper (16) einstückig ausgebildet sind.

**17.** Verwendung eines Dichtrings und / oder einer Dichtungsanordnung nach einem der Ansprüche 1 bis 16 in einem Werkzeug mit Absperrkopf (17) zur Abdichtung von Medien führenden Pipelines (18).

**18.** Verwendung nach Anspruch 17 zur Abdichtung von Öl- oder Gaspipelines (18).
